# EUROPÄISCHE PATENTSCHRIFT

(11) **EP 3 237 269 B1**
(45) Veröffentlichungstag und Bekanntmachung des Hinweises auf die Patenterteilung: **30.01.2019**
(21) Anmeldenummer: 15816670.2
(22) Anmeldetag: 21.12.2015
(51) Int. Cl.: B62D 35/00, B29C 45/00

(54) **SEITENSPOILER FÜR EIN KRAFTFAHRZEUG**
SIDE SPOILER FOR A MOTOR VEHICLE
DÉFLECTEUR LATÉRAL POUR VÉHICULE AUTOMOBILE

(30) Priorität: 22.12.2014 DE 202014106201 U; 11.02.2015 DE 202015100661 U
(43) Veröffentlichungstag der Anmeldung: 01.11.2017
(73) Patentinhaber: REHAU AG + Co, 95111 Rehau (DE)
(72) Erfinder: KAMMERER, Jörg, 95632 Wunsiedel (DE); VOGEL, Matthias, 95233 Helmbrechts (DE); STEIN, David, 95191 Leupolsgrün (DE)
(86) Internationale Anmeldenummer: PCT/EP2015/002584
(87) Internationale Veröffentlichungsnummer: WO 2016/102059

(56) Entgegenhaltungen:
- EP-A1- 2 464 542
- EP-A2- 2 436 580
- DE-A1- 3 347 364
- DE-A1- 3 741 048
- DE-U1-202013 005 386
- US-A1- 2003 094 835

## Beschreibung

Die vorliegende Erfindung betrifft einen Seitenspoiler für ein Kraftfahrzeug mit einem schalenartigen, die Außenkontur bildenden Spoilerelement, wobei das Spoilerelement eine Sichtseite und eine dieser gegenüberliegende Innenseite aufweist, und mit einem auf der Innenseite angeordneten und mit dem Spoilerelement verbindbaren Trägerelement zur Befestigung an der Karosserie oder einem weiteren Anbauteil des Kraftfahrzeuges, wobei das Spoilerelement und das Trägerelement länglich ausgebildet sind.

Ein gattungsgemäßer Seitenspoiler kann der Gebrauchsmusterschrift DE 20 2013 005 386 U1 entnommen werden. Nachteilig an einem aus dem Stand der Technik bekannten Seitenspoiler ist, dass zur Verbindung von Spoilerelement und Trägerelement aufwendige und daher kostenintensive Fügeverfahren Anwendung finden müssen. Dies sind zum einen Schweißverfahren wie das Ultraschall- oder Laserschweißen oder, falls eine Beeinträchtigung der Sichtseite durch ein Schweißverfahren ausgeschlossen werden soll, durch eine Klebeverbindung. Für das Ultraschall- oder Laserschweißen sind aufwendige Anlagen notwendig, welche die Herstelllung eines Seitenspoilers verteuern, und bei Klebeverfahren führt die notwendige Zeit für das Aushärten des Klebstoffes und dessen komplexe Applikation zu einer geringeren Rentabilität. In beiden Fällen sind zudem zusätzliche Einspann- und Positioniervorrichtungen zwingend notwendig.

Das Dokument US 2003/0094835A1 offenbart im Zusammenhang mit einem von einem Seitenspoiler abweichenden Bauteil ein alternatives Verbindungskonzept mittels einer Vielzahl von Rastelementen.

Aufgabe der vorliegenden Erfindung ist es daher ein Seitenspoilerelement anzugeben, bei welchem sich das Spoilerelement und das Trägerelement vereinfacht miteinander verbinden lassen.

Diese Aufgabe wird gelöst durch einen Seitenspoiler für ein Kraftfahrzeug mit einem schalenartigen, die Außenkontur bildenden Spoilerelement, wobei das Spoilerelement eine Sichtseite und eine dieser gegenüberliegende Innenseite aufweist, und mit einem auf der Innenseite angeordneten und mit dem Spoilerelement verbindbaren Trägerelement zur Befestigung an der Karosserie oder einem weiteren Anbauteil des Kraftfahrzeuges, wobei das Spoilerelement und das Trägerelement länglich ausgebildet sind, wobei das Spoilerelement entlang seiner Längsseiten einen ersten Seitenrand und einen diesem gegenüberliegenden zweiten Seitenrand aufweist, wobei der erste Seitenrand zumindest abschnittsweise durch einen Umbug gebildet ist, der mit der Innenseite eine Hinterschneidung bildet, und wobei der zweite Seitenrand durch einen von der Innenseite abstehenden Flansch gebildet ist und, wobei sich das Trägerelement im verbundenen Zustand zumindest abschnittsweise von dem ersten Seitenrand zu dem zweiten Seitenrand erstreckt, wobei das Trägerelement hierbei mit wenigstens einem Anlagebereich über die Hinterschneidung formschlüssig mit dem ersten Seitenrand verbunden ist und das Trägerelement zusätzlich mit dem zweiten Seitenrand über wenigstens eine Rastverbindung verbunden ist, wobei die Rastverbindung durch ein Rastelement, das von dem Flansch absteht und mit der Innenseite einen Kanal bildet, und durch ein an dem Trägerelement ausgebildetes und in dem Kanal aufgenommenes Rastgegenelement gebildet ist, wodurch das Spoilerelement und das Trägerelement in einer einzigen Fügerichtung miteinander verbindbar sind. Die erfindungsgemäße Ausbildung des Seitenspoilers ermöglicht es das Spoilerelement und das Trägerelement in nur einer einzigen Fügerichtung durch Ineinanderschieben miteinander zu verbinden. Dies erlaubt eine gegenüber dem Stand der Technik deutlich günstigere Herstellung des Seitenspoilers. Ferner wird durch die Verbindung des Trägerelements mit dem Spoilerelement über einen Formschluss zwischen Anlagebereich und Hinterschneidung nur auf einer der Längsseiten eine Rastverbindung benötigt, so dass ein entsprechender Seitenspoiler gegenüber einer auf beiden Seiten vorgesehenen Rastverbindung deutlich günstiger hergestellt werden kann. Des Weiteren kommt es auf der Sichtseite des Spoilerelementes nicht zu Abzeichnungen aufgrund von Materialanhäufungen auf der Innenseite, da auch die vorgesehene Rastverbindung nicht unmittelbar auf der Innenseite, sondern über einen an dem Rand des Spoilerelements ausgebildeten Flansch über ein Rastelement realisiert wird. Dies ist insbesondere im Hinblick auf eine lackierte Sichtseite, wie es bei Seitenspoilern in der Regel üblich ist, von großem Vorteil, da sich durch eine Lackierung vorgenannte Abzeichnungen noch deutlicher erkennen lassen und insofern zu vermeiden sind.

Das Trägerelement ist bevorzugt einteilig oder einstückig ausgebildet kann jedoch auch mehrteilig ausgebildet sein.

Das Trägerteil kann wenigstens ein Dichtelement und/oder wenigstens eine Weichkomponente zur Dichtung oder zur Anlage an der Karosserie oder einem weiteren Anbauteil des Kraftfahrzeuges aufweisen. Das Dichtelement und/oder die Weichkomponente ist/sind bevorzugt im Mehrkomponentenspritzguss einstückig mit dem Trägerteil ausgebildet.

Der Kanal kann im Querschnitt U-förmig oder V-förmig ausgebildet sein. Auch eine Mischform zwischen U-förmig und V-förmig ist denkbar.

Das Spoilerelement kann wenigstens einen Anschlag und das Trägerelement wenigstens einen mit dem Anschlag zusammenwirkenden Gegenanschlag aufweisen. Der Anschlag und der mit ihm zusammenwirkende Gegenanschlag verhindern, dass die Rastverbindung über den eigentlichen Rastpunkt hinaus zusammengesteckt werden kann und sich ansonsten wieder lösen würde.

Bevorzugt ist der Anschlag an dem Rastelement ausgebildet. Weiter bevorzugt ist der Gegenanschlag an dem Rastgegenelement ausgebildet. Für die Ausformung von Rastelement bzw. Rastgegenelement, insbesondere bei der Herstellung von Spoilerelement und Trägerelement in einem Kunststoff-Spritzgussverfahren, sind in diesen Bereichen sog. Schieber notwendig, so dass es einen Kostenvorteil darstellt, Anschlag und Gegenanschlag zusammen mit den entsprechenden Rast- und Rastgegenelementen auszubilden.

Ferner kann ein Arretierelement für die Fixierung des verbundenen Zustandes von Spoilerelement und Trägerelement vorgesehen sein. Zusätzlich zu der Rastverbindung erschwert ein Arretierelement das Lösen des verbundenen Zustandes von Spoilerelement und Trägerelement und verhindert so ein ungewolltes Lösen von Spoilerelement und Trägerelement.
Bevorzugt wirkt das Arretierelement mit einem Arretiergegenelement zusammen. Vorteilhafterweise ist das Arretierelement als ein Schnappelement ausgebildet. Das Schnappelement wirkt mit dem Arretiergegenelement derart zusammen, dass das Arretiergegenelement beim Verbinden von Trägerelement und Spoilerelement zunächst das Schnappelement entgegen der Fügerichtung auslenkt und nach erfolgter Überschreitung eines gewissen Auslenkweges, und nach erfolgter Überschreitung des Arretiergegenelementes, das Schnappelement hinter dem Arretiergegenelement in seine ursprüngliche Position zurückschnappt. Infolge dessen ist das Trägerelement an einer Bewegung in die der Fügerichtung entgegengesetzte Richtung gehindert oder diese Bewegung ist zumindest deutlich erschwert.

In einer bevorzugten Ausführung ist das Arretierelement an dem Trägerelement und das Arretiergegenelement an dem Spoilerelement vorgesehen.

Alternativ oder in Kombination kann zu einem Arretierelement eine stoffschlüssige Verbindung (z.B. mittels eines Klebstoffes oder mittels einer Schweißverbindung) zwischen Trägerteil und Spoilerelement vorgesehen sein, wenn das Trägerteil und das Spoilerelement miteinander verbunden sind.

Das Spoilerelement und / oder das Trägerelement können als Kunststoff-Spritzgussteile ausgebildet sein.

Teil der Erfindung ist ferner ein Hauptspoiler mit wenigstens einem mit diesem verbundenen vorstehend beschriebenen Seitenspoiler, insbesondere einem Seitenspoiler nach einem der Ansprüche 1 bis 10, sowie ein Kraftfahrzeug mit einem wie vorstehend beschriebenen Seitenspoiler, insbesondere einem Seitenspoiler nach einem der Ansprüche 1 bis 10 oder mit einem Hauptspoiler nach Anspruch 11.

Im Folgenden wird die Erfindung anhand lediglich Ausführungsbeispiele darstellender Figuren näher erläutert. Gleiche oder funktionsgleiche Elemente sind mit den gleichen Bezugszeichen versehen.

Es zeigen:
- Fig. 1: eine dreidimensionale Darstellung eines Spoilerelements;
- Fig. 2: eine dreidimensionale Darstellung eines Trägerelements;
- Fig. 3: die Fügerichtung beim Verbinden eines Spoilerelements mit einem Trägerele-ment;
- Fig. 4a: eine dreidimensionale Darstellung eines Seitenspoilers für ein Kraftfahrzeug mit dem Spoilerelement und mit dem mit dem Spoilerelement verbundenen Trägerelement;
- Fig. 4b: eine vergrößerte Detailansicht aus Fig. 4a;
- Fig. 5: eine andere dreidimensionale Darstellung des Seitenspoilers aus Fig. 4a mit eingezeichneten Schnittlinien;
- Fig. 6: die Querschnittsdarstellung entlang der Schnittlinie A-A aus Fig. 5;
- Fig. 7: die Querschnittsdarstellung entlang der Schnittlinie B-B aus Fig. 5;
- Fig. 8: die Querschnittsdarstellung entlang der Schnittlinie C-C aus Fig. 5.

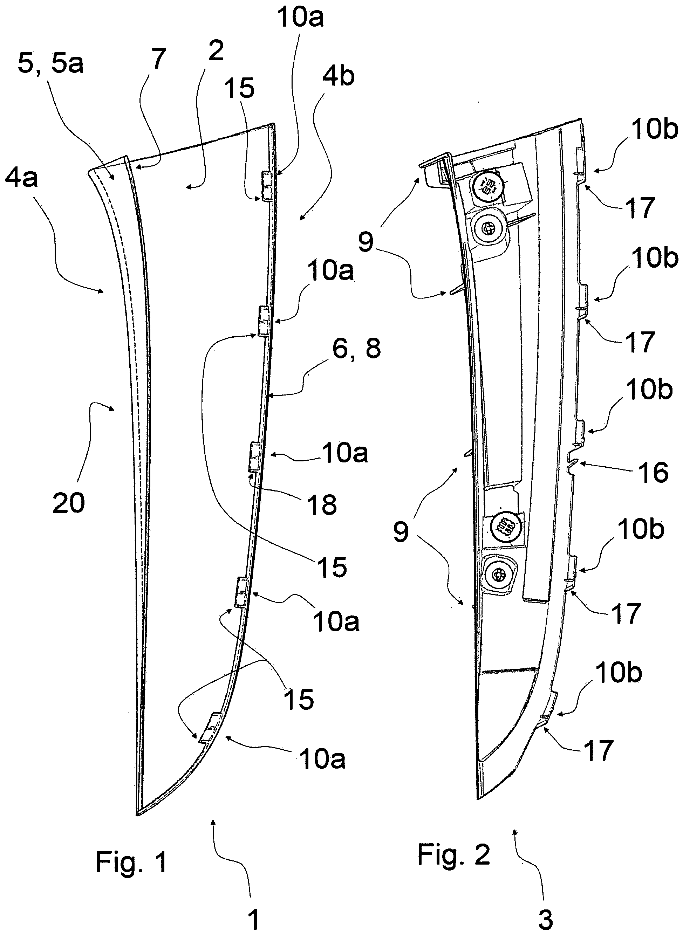

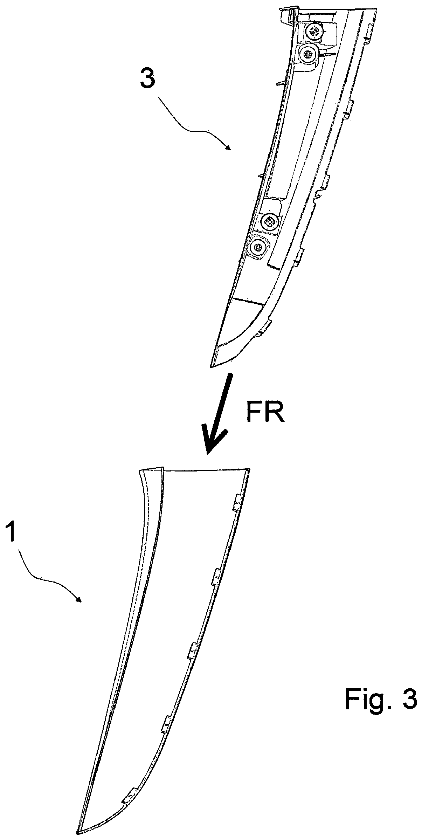

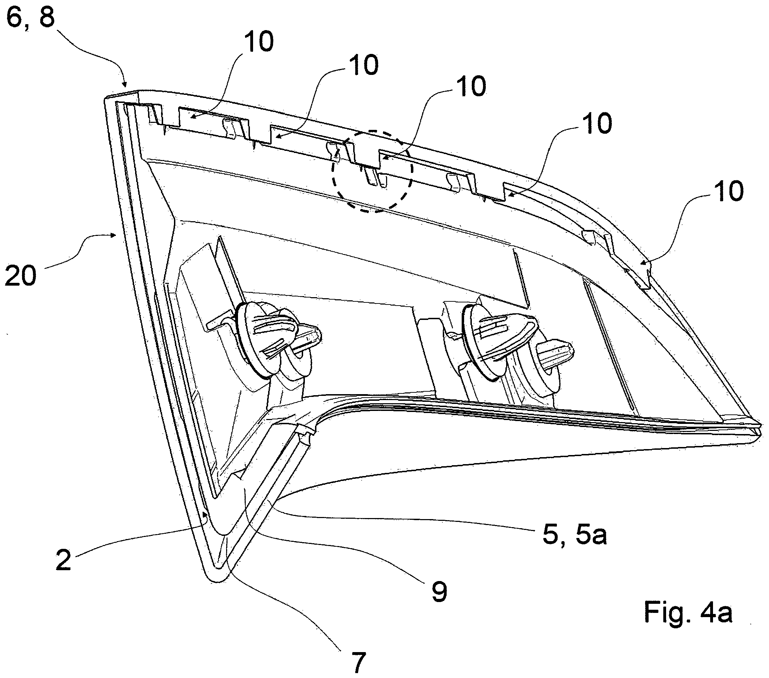

Die Fig. 1 zeigt ein schalenartiges, die Außenkontur bildendes Spoilerelement 1, wobei das Spoilerelement 1 eine Sichtseite 20 und eine dieser gegenüberliegende Innenseite 2 aufweist. Auf der Innenseite 2 kann ein mit dem Spoilerelement 1 verbindbares Trägerelement 3 (vgl. Fig. 2) zur Befestigung an der Karosserie oder einem weiteren Anbauteil des Kraftfahrzeuges angeordnet werden. Spoilerelement 1 und Trägerelement 3 bilden im verbundenen Zustand einen Seitenspoiler für ein Kraftfahrzeug. Das Spoilerelement 1 und das Trägerelement 3 sind jeweils länglich ausgebildet. Das Spoilerelement 1 weist entlang seiner Längsseiten 4a, 4b einen ersten Seitenrand 5 und einen diesem gegenüberliegenden zweiten Seitenrand 6 auf. Der erste Seitenrand 5 und/oder der zweite Seitenrand 6 können in der Einbaulage am Kraftfahrzeug zumindest teilweise sichtbar sein. Der erste Seitenrand 5 ist hierbei zumindest abschnittsweise durch einen Umbug 5a gebildet, der mit der Innenseite 2 eine Hinterschneidung 7 bildet. Der zweite Seitenrand 6 ist durch einen von der Innenseite 2 abstehenden Flansch 8 gebildet. Das Trägerelement 3 erstreckt sich im verbundenen Zustand (vgl. Fig. 4a) zumindest abschnittsweise von dem ersten Seitenrand 5 zu dem zweiten Seitenrand 6. Das Trägerelement 3 ist hierbei mit wenigstens einem Anlagebereich 9 über die Hinterschneidung 7 formschlüssig mit dem ersten Seitenrand 5 verbunden. Zusätzlich ist das Trägerelement 3 mit dem zweiten Seitenrand 6 über wenigstens eine Rastverbindung 10 verbunden, wobei die Rastverbindung 10 durch ein Rastelement 10a, das von dem Flansch 8 absteht und mit der Innenseite 2 einen Kanal bildet, und durch ein an dem Trägerelement 3 ausgebildetes und in den Kanal 11 aufgenommenes Rastgegenelement 10b gebildet. Hierdurch ist das Spoilerelement 1 und das Trägerelement 3 in einer einzigen Fügerichtung FR miteinander verbindbar. Die entsprechende Fügerichtung ist in Fig. 3 näher erläutert, welche zeigt, dass das Trägerelement 3 ähnlich einem Schwert in eine Schwertscheide in das Spoilerelement 1 einsteckbar ist. Das Spoilerelement 1 weist wenigstens einen Anschlag 15 und das Trägerelement 3 wenigstens einen mit dem Anschlag 15 zusammenwirkenden Gegenanschlag 17 auf. Der Anschlag 15 ist hierbei an dem Rastelement 10a ausgebildet und der Gegenanschlag 17 an dem Rastgegenelement 10b ausgebildet. Ferner ist ein Arretierelement 16 für die Fixierung des verbundenen Zustandes von Spoilerelement 1 und Trägerelement 3 vorgesehen. Das Arretierelement 16 wirkt hierbei mit einem Arretiergegenelement 18 zusammen. Das Arretierelement 16 ist als ein Schnappelement ausgebildet. Das Arretierelement 16 ist an dem Trägerelement 3 und das Arrtiergegenelement 18 an dem Spoilerelement 1 vorgesehen. Das Spoilerelement 1 und das Trägerelement 3 sind jeweils als Kunststoff-Spritzgussteil ausgebildet.

Die Fig. 4a zeigt eine dreidimensionale Darstellung des Seitenspoilers für ein Kraftfahrzeug mit dem Spoilerelement 1 und dem mit diesem verbundenen Trägerelement 3. Hier ist noch einmal deutlicher erkennbar, wie das Spoilerelement 1 entlang seiner Längsseiten 4a, 4b einen ersten Seitenrand 5 und einen mit diesem gegenüberliegenden zweiten Seitenrand 6 aufweist, wobei der erste Seitenrand 5 zumindest abschnittsweise durch einen Umbug 5a gebildet ist, der mit der Innenseite 2 eine Hinterschneidung 7 bildet, und wobei der zweite Seitenrand 6 durch einen von der Innenseite 2 abstehenden Flansch 8 gebildet ist. Hierbei erstreckt sich das Trägerelement 3 im hier gezeigten verbundenen Zustand zumindest abschnittsweise von dem ersten Seitenrand 5 zu dem zweiten Seitenrand 6, wobei das Trägerelement 3 hierbei mit wenigstens einem Anlagebereich 9 über die Hinterschneidung 7 formschlüssig mit dem ersten Seitenrand 5 verbunden ist. Das Trägerelement 3 ist zusätzlich mit dem zweiten Seitenrand 6 über wenigstens eine Rastverbindung 10 verbunden.

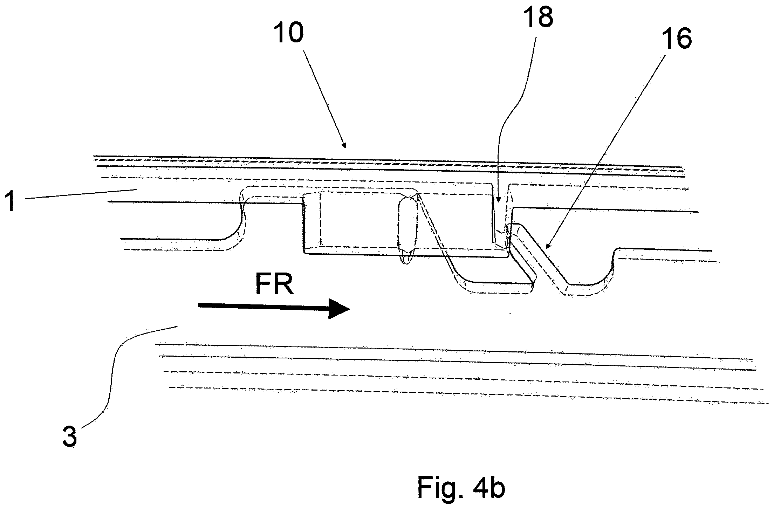

Die Fig. 4b zeigt eine Detaildarstellung des in Fig. 4a mit einem gestrichelten Kreis markierten Bereichs. In Fig. 4b ist das Arretierelement 16 für die Fixierung des verbundenen Zustandes von Spoilerelement 1 und Trägerelement 3 vergrößert dargestellt. Das Arretierelement 16 wirkt mit dem Arretiergegenelement 18 zusammen. Das Arretiergegenelement 18 ist zusammen mit dem Rastelement 10a ausgebildet. Das Arretierelement 16 ist als ein Schnappelement 16 ausgebildet und ist an dem Trägerelement 3 vorgesehen. Das Schnappelement 16 wirkt mit dem Arretiergegenelement 18 derart zusammen, dass das Arretiergegenelement 18 beim Verbinden von Trägerelement 3 und Spoilerelement 1 zunächst das Schnappelement 16 entgegen der Fügerichtung FR auslenkt und nach erfolgter Überschreitung eines gewissen Auslenkweges, und nach erfolgter Überschreitung des Arretiergegenelementes 18, das Schnappelement 16 hinter dem Arretiergegenelement 18 in seine ursprüngliche Position zurückschnappt. Infolge dessen ist das Trägerelement 3 an einer Bewegung in die der Fügerichtung FR entgegengesetzte Richtung gehindert oder diese Bewegung ist zumindest deutlich erschwert.

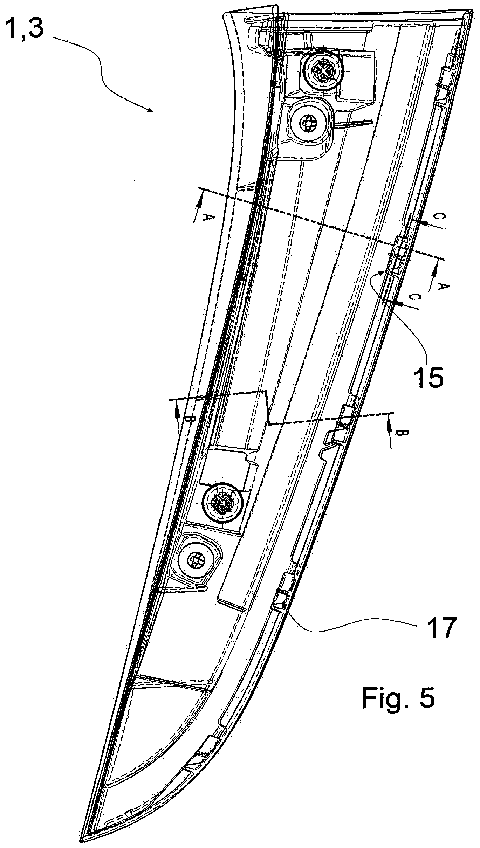

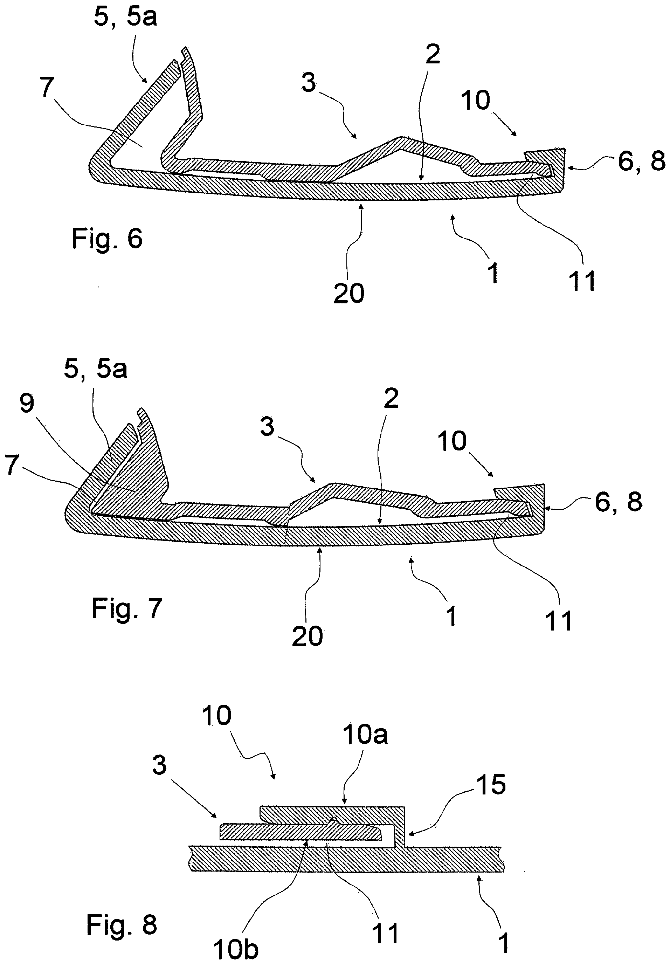

Die Fig. 5 zeigt den Seitenspoiler für ein Kraftfahrzeug in einer von Fig. 4a abweichenden dreidimensionalen Ansicht. Die hier eingezeichneten Schnittlinien sind in den nachfolgenden Fig. 6 bis 8 näher erläutert.

Die Fig. 6 zeigt den Querschnitt entlang der Linie A-A aus Fig. 5 mit der zwischen dem Umbug 5a und der Innenseite 2 gebildeten Hinterschneidung 7, sowie dem von der Innenseite 2 abstehenden Flansch 8 des Spoilerelements 1. In dem schalenartigen, die Außenkontur bildenden Spoilerelement 1 ist das Trägerelement 3 zur Befestigung an der Karossiere oder einem weiteren Anbauteil des Kraftfahrzeuges auf der Innenseite 2 des Spoilerelements 1 angeordnet. Das Trägerelement 3 ist zusätzlich mit dem zweiten Seitenrand 6 über wenigstens eine Rastverbindung 10 verbunden, wobei die Rastverbindung 10 durch ein Rastelement 10a, das von dem Flansch 8 absteht und mit der Innenseite 2 einen Kanal 11 bildet, und durch ein an dem Trägerelement 3 ausgebildetes und in dem Kanal 11 aufgenommenes Rastgegenelement 10b gebildet ist, wodurch das Spoilerelement 1 und das Trägerelement 3 in einer einzigen Fügerichtung FR miteinander verbindbar sind. Der Kanal 11 kann im Querschnitt U-förmig oder V-förmig ausgebildet sein.

Die Fig. 7 zeigt in dem Querschnitt entlang der Schnittlinie B-B aus Fig. 5, dass das Trägerelement 3 im verbundenen Zustand sich zumindest abschnittsweise von dem ersten Seitenrand 5 zu dem zweiten Seitenrand 6 erstreckt, wobei das Trägerelement 3 hierbei mit wenigstens einem Anlagebereich 9 über die Hinterschneidung 7 formschlüssig mit dem ersten Seitenrand 5 verbunden ist.

Der in Fig. 8 dargestellte Querschnitt entlang der Schnittlinie C-C aus Fig. 5 zeigt eine vergrößerte Darstellung der Rastverbindung 10. Das Trägerelement 3 ist mit den Seitenrand 6 des Spoilerelements 1 über die Rastverbindung 10 verbunden, wobei die Rastverbindung 10 durch ein Rastelement 10a, das von dem Flansch 8 absteht (hier aus der Bildebene heraus) und mit der Innenseite 2 einen Kanal 11 bildet. Die Rastverbindung 10 ist ferner durch ein an dem Trägerelement 3 ausgebildetes und in dem Kanal 11 aufgenommenes Rastgegenelement 10b gebildet.

## Patentansprüche

1. Seitenspoiler für ein Kraftfahrzeug mit
- einem schalenartigen, die Außenkontur bildenden Spoilerelement (1), wobei das Spoilerelement (1) eine Sichtseite (20) und eine dieser gegenüberliegende Innenseite (2) aufweist,
- einem auf der Innenseite (2) angeordneten und mit dem Spoilerelement (1) verbindbaren Trägerelement (3) zur Befestigung an der Karosserie oder einem weiteren Anbauteil des Kraftfahrzeuges,
wobei das Spoilerelement (1) und das Trägerelement (3) länglich ausgebildet sind,
**dadurch gekennzeichnet, dass**
das Spoilerelement (1) entlang seiner Längsseiten (4a, 4b) einen ersten Seitenrand (5) und einen diesem gegenüberliegenden zweiten Seitenrand (6) aufweist, wobei der erste Seitenrand (5) zumindest abschnittsweise durch einen Umbug (5a) gebildet ist, der mit der Innenseite (2) eine Hinterschneidung (7) bildet, und wobei der zweite Seitenrand (6) durch einen von der Innenseite (2) abstehenden Flansch (8) gebildet ist und,
das sich das Trägerelement (3) im verbundenen Zustand zumindest abschnittsweise von dem ersten Seitenrand (5) zu dem zweiten Seitenrand (6) erstreckt, wobei das Trägerelement (3) hierbei mit wenigstens einem Anlagebereich (9) über die Hinterschneidung (7) formschlüssig mit dem ersten Seitenrand (5) verbunden ist und das Trägerelement (3) zusätzlich mit dem zweiten Seitenrand (6) über wenigstens eine Rastverbindung (10) verbunden ist, wobei die Rastverbindung (10) durch ein Rastelement (10a), das von dem Flansch (8) absteht und mit der Innenseite (2) einen Kanal (11) bildet, und durch ein an dem Trägerelement (3) ausgebildetes und in dem Kanal (11) aufgenommes Rastgegenelement (10b) gebildet ist, wodurch das Spoilerelement (1) und das Trägerelement (3) in einer einzigen Fügerichtung (FR) miteinander verbindbar sind.

2. Seitenspoiler nach Anspruch 1, **dadurch gekennzeichnet, dass** der Kanal (11) im Querschnitt U-förmig oder V-förmig ausgebildet ist.

3. Seitenspoiler nach Anspruch 1 oder 2, **dadurch gekennzeichnet, dass** das Spoilerelement (1) wenigstens einen Anschlag (15) und das Trägerelement (3) wenigstens einen mit dem Anschlag (15) zusammenwirkenden Gegenanschlag (17) aufweist.

4. Seitenspoiler nach Anspruch 3, **dadurch gekennzeichnet, dass** der Anschlag (15) an dem Rastelement (10a) ausgebildet ist.

5. Seitenspoiler nach Anspruch 3 oder 4, **dadurch gekennzeichnet, dass** der Gegenanschlag (17) an dem Rastgegenelement (10b) ausgebildet ist.

6. Seitenspoiler nach einem der vorstehenden Ansprüche, **dadurch gekennzeichnet, dass** ein Arretierelement (16) für die Fixierung des verbundenen Zustandes von Spoilerelement (1) und Trägerelement (3) vorgesehen ist.

7. Seitenspoiler nach Anspruch 6, **dadurch gekennzeichnet, dass** das Arretierelement (16) mit einem Arretiergegenelement (18) zusammenwirkt.

8. Seitenspoiler nach Anspruch 6 oder 7, **dadurch gekennzeichnet, dass** das Arretierelement (16) als ein Schnappelement (16) ausgebildet ist.

9. Seitenspoiler nach Anspruch 7 oder 8, **dadurch gekennzeichnet, dass** das Arretierelement (16) an dem Trägerelement (3) und das Arretiergegenelement (18) an dem Spoilerelement (1) vorgesehen ist.

10. Seitenspoiler nach einem der vorstehenden Ansprüche, **dadurch gekennzeichnet, dass** das Spoilerelement (1) und / oder das Trägerelement (3) als Kunststoff-Spritzgussteil ausgebildet ist / sind.

11. Hauptspoiler mit wenigstens einem mit diesem verbundenen Seitenspoiler nach einem der vorstehenden Ansprüche.

12. Kraftfahrzeug mit einem Seitenspoiler nach einem der vorstehenden Ansprüche 1 bis 10 oder mit einem Hauptspoiler nach Anspruch 11.

## Claims

1. Side spoiler for a motor vehicle with
- a shell-like spoiler element (1) forming the outside contour, wherein the spoiler element (1) comprises a visible side (20) and an inner side (2) located opposite the visible side,
- a support element (3), arranged on the inner side (2) and connectable with the spoiler element (1), for fastening onto the bodywork or a further attachment part of the motor vehicle,
wherein the spoiler element (1) and the support element (3) are configured elongatedly,
**characterized in that**
the spoiler element (1), along its longitudinal sides (4a, 4b), comprises a first side edge (5) and a second side edge (6) located opposite thereof, wherein the first side edge (5) is formed, at least in sections, by a foldback (5a), which, with the inner side (2), forms an undercut (7), and wherein the second side edge (6) is formed by a flange (8) projecting from the inner side (2), and
the support element (3), in the connected state, extends, at least in sections, from the first side edge (5) to the second side edge (6), wherein the support element (3) is, with at least one contact area (9), via the undercut (7), form-fittingly connected with the first side edge (5), and the support element (3) additionally is connected with the second side edge (6) via at least one latching connection (10), wherein the latching connection (10) is formed through a latching element (10a), which projects from the flange (8) and forms a channel (11) with the inner side (2), and is formed through a latching counter-element (10b) configured on the support element (3) and received in the channel (11), whereby the spoiler element (1) and the support element (3) are connectable with one another in a single joining direction (FR).

2. Side spoiler according to claim 1, **characterized in that** the channel (11) is configured, in the cross-section, U-shapedly or V-shapedly.

3. Side spoiler according to claim 1 or 2, **characterized in that** the spoiler element (1) comprises at least one stop (15), and the support element (3) comprises at least one counter-stop (17) interacting with the stop (15).

4. Side spoiler according to claim 3, **characterized in that** the stop (15) is configured on the latching element (10a).

5. Side spoiler according to claim 3 or 4, **characterized in that** the counter-stop (17) is configured on the latching counter-element (10b).

6. Side spoiler according to one of the preceding claims, **characterized in that** a locking element (16) is provided for the fixing of the connected state of the spoiler element (1) and the support element (3).

7. Side spoiler according to claim 6, **characterized in that** the locking element (16) interacts with a locking counter-element (18),

8. Side spoiler according to claim 6 or 7, **characterized in that** the locking element (16) is configured as a snap element (16).

9. Side spoiler according to claim 7 or 8, **characterized in that** the locking element (16) is provided on the support element (3) and the locking counter-element (18) is provided on the spoiler element (1).

10. Side spoiler according to one of the preceding claims, **characterized in that** the spoiler element (1) and / or the support element (3) is / are configured as plastic injected-molded part(s).

11. Main spoiler with at least one side spoiler connected to the same according to one of the preceding claims.

12. Motor vehicle with a side spoiler according to one of the preceding claims 1 to 10, or with a main spoiler according to claim 11.

## Revendications

1. Déflecteur latéral destiné à un véhicule automobile qui comporte
- un élément déflecteur (1) en forme de coque qui forme le contour extérieur, ledit élément déflecteur (1) présentant un côté visible (20) et un côté intérieur (2) opposé à celui-ci,
- un élément de support (3) disposé sur le côté intérieur (2) qui peut être relié à l'élément déflecteur (1) et qui est destiné à être fixé sur la carrosserie ou sur une autre pièce rapportée du véhicule automobile,
l'élément déflecteur (1) et l'élément de support (3) ayant une configuration allongée,
**caractérisé en ce que**
l'élément déflecteur (1) comporte le long de ses côtés longitudinaux (4a, 4b) un premier bord latéral (5) et un second bord latéral (6) opposé à celui-ci, le premier bord latéral (5) étant formé au moins par endroits par un repli (5a) qui forme avec le côté intérieur (2) une contre-dépouille (7) et le second bord latéral (6) étant formé par une bride (8) faisant saillie du côté intérieur (2) et
**en ce que** l'élément de support (3) s'étend, dans l'état assemblé, au moins par endroits, du premier bord latéral (5) au second bord latéral (6), l'élément de support (3) étant relié ici par complémentarité de formes au premier bord latéral (5) au moyen d'au moins une zone d'appui (9) par le biais de la contre-dépouille (7) et l'élément de support (3) étant relié en plus au second bord latéral (6) par le biais d'au moins une liaison par encliquetage (10), ladite liaison par encliquetage (10) étant formée par un élément d'encliquetage (10a), qui fait saillie de la bride (8) et qui forme avec le côté intérieur (2) un canal (11), et par un élément d'encliquetage homologue (10b) qui est réalisé sur l'élément de support (3) et logé dans le canal (11), de telle sorte que l'élément déflecteur (1) et l'élément de support (3) peuvent être reliés entre eux dans une direction d'assemblage unique.

2. Déflecteur latéral selon la revendication 1, **caractérisé en ce que** le canal (11) est conçu avec une section transversale en forme de U ou de V.

3. Déflecteur latéral selon la revendication 1 ou 2, **caractérisé en ce que** l'élément déflecteur (1) présente moins une butée (15) et l'élément de support (3) d'au moins une contre-butée (17) agissant en conjonction avec la butée (15).

4. Déflecteur latéral selon la revendication 3, **caractérisé en ce que** la butée (15) est réalisée sur l'élément d'encliquetage (10a).

5. Déflecteur latéral selon la revendication 3 ou 4, **caractérisé en ce que** la contre-butée (17) est réalisée sur l'élément d'encliquetage homologue (10b).

6. Déflecteur latéral selon l'une quelconque des revendications précédentes, **caractérisé en ce qu'**un élément de blocage (16) est prévu pour fixer la position d'assemblage de l'élément déflecteur (1) et de l'élément de support (3).

7. Déflecteur latéral selon la revendication 6, **caractérisé en ce que** l'élément de blocage (16) agit en conjonction avec un contre-élément de blocage (18).

8. Déflecteur latéral selon la revendication 6 ou 7, **caractérisé en ce que** l'élément de blocage (16) est conçu comme un élément à déclic (16).

9. Déflecteur latéral selon la revendication 7 ou 8, **caractérisé en ce que** l'élément de blocage (16) est prévu sur l'élément de support (3) et le contre-élément de blocage (18) sur l'élément déflecteur (1).

10. Déflecteur latéral selon l'une quelconque des revendications précédentes, **caractérisé en ce que** l'élément déflecteur (1) et/ou l'élément de support (3) est/sont conçu(s) comme une pièce moulée par injection en matière plastique.

11. Déflecteur principal avec au moins un déflecteur latéral relié à celui-ci selon l'une quelconque des revendications précédentes.

12. Véhicule automobile comportant un déflecteur latéral selon l'une quelconque des revendications précédentes 1 à 10 ou un déflecteur principal selon la revendication 11.
